# EUROPEAN PATENT SPECIFICATION

(11) **EP 2 329 291 B1**
(45) Date of publication and mention of the grant of the patent: **24.02.2016**
(21) Application number: 09781768.8
(22) Date of filing: 12.08.2009
(51) Int. Cl.: G01S 15/66, B63J 99/00, G01S 13/72, G01S 13/86, G01S 7/00

(54) **SENSORS IN CONCERT FOR MARITIME SURVEILLANCE**
KONZERTIERTE SENSOREN FÜR DIE SEEVERMESSUNG
CAPTEURS À L UNISSON POUR UNE SURVEILLANCE MARITIME

(30) Priority: 19.08.2008 NL 1035845
(43) Date of publication of application: 08.06.2011
(73) Proprietor: Thales Nederland B.V., 7550 GD Hengelo (NL)
(72) Inventor: LAARHUIS, Jan, NL-7534 Enschede (NL)
(74) Representative: Nguyen Van Yen, Christian
(86) International application number: PCT/EP2009/060455
(87) International publication number: WO 2010/020573

(56) References cited:
- EP-A1- 1 772 746
- RU-C1- 2 210 087
- US-A- 3 842 774
- US-A- 4 639 227
- US-A- 5 307 289
- US-A1- 2007 171 042
- PASTORE T J ET AL: "Mobility as a fusion enabler" INFORMATION FUSION, 2008 11TH INTERNATIONAL CONFERENCE ON, IEEE, PISCATAWAY, NJ, USA, 30 June 2008 (2008-06-30), pages 1-4, XP031395496 ISBN: 978-3-8007-3092-6
- CRAIG CARTHEL ET AL: "Multisensor tracking and fusion for maritime surveillance" INFORMATION FUSION, 2007 10TH INTERNATIONAL CONFERENCE ON, IEEE, PI, 1 July 2007 (2007-07-01), pages 1-6, XP031193919 ISBN: 978-0-662-45804-3
- BLACKMAN S ET AL: "Design and Analysis of Modern Tracking Systems ; MULTIPLE SENSOR TRACKING: ISSUES AND METHODS", DESIGN AND ANALYSIS OF MODERN TRACKING SYSTEMS, XX, XX, 1 January 1999 (1999-01-01), pages 595-598,613, XP002374890,

## Description

The present invention relates to the maritime surveillance application domain. It is a concern for government bodies, international organisations, commercial entities which operate maritime lines, and regular or occasional passengers as well, to be able to be reassured that coastal navigation can be considered safe and secure and also that possible trafficking on these routes can be prevented or intercepted. Different types of systems have been designed and deployed to this effect. Defence forces use coastal defence systems. Civilian authorities use Vessel Traffic Management Information Systems (VTMIS). Concepts common to these systems, even if their implementation may be different are: i) the use of sensors, mostly long range radars positioned on high points along the coast; ii) an operations centre which receives sensor data and presents them to operators; iii) intervention means the use of which may be decided by the human operators.

But indeed, long range radars are costly to acquire, install, maintain and reposition. This last drawback renders a traditional maritime surveillance system difficult to reconfigure, for instance to obtain a better coverage in case of evolving threats. It is also a limitation of radars that they are good at detecting objects, but no so good at classifying and identifying objects. This may not be a problem where the surveillance system has only to deal with cooperative objects, which have normally to operate an Automatic Identification System (AIS) whereby they will permanently communicate to the VTMIS operations centre their identity, position and other data. It is a significant problem where non-cooperative objects try do deceive the surveillance system which makes it all the more necessary to correlate various sources of identification. There is a need then for a more versatile maritime surveillance system based on a different sensors architecture, which provides a solution to these problems by replacing the long range radars of the prior art by clusters of, combined sensors positioned at sea.

A number of prior art documents provide partial solutions to this problem. This is for instance the case of US patent application published under n°US2007/171042, US patents n°3,842,774 and 4,639,227. A publication in the name of S. Blackman et al. ("Design and analysis of Modern Tracking Systems", January 1st, 1999, XP002374890) discloses a multiple platform/multiple sensors system wherein a first processing is applied to the output of sensors of a same type and a second processing is applied to the output of sensors of different types. But this prior art system fails to provide a resolution which would meet the current needs of surveillance.

This is an object of this invention to provide a maritime surveillance system as claimed in claim 1.

It is also an object of the invention to disclose a maritime surveillance process to implement the maritime surveillance system of the invention.

An other advantage of the invention is that it can be rapidly deployed and positioned and thus can be used in rapid deployment operations wherein the centre of operations will be embarked on a navy vessel. Also, the system will offer improved performance measured by the ratio of detection distance (measured from the coast line) to the minimum detected target size. It will also offer improved system availability and defensibility since a default of one element in the cluster of sensors only affects marginally the operational capacity of the system as a whole.

The invention will be better understood and its various features and advantages will be made more apparent from the description here below of some of the possible embodiments and from the appended drawings, among which:
- Figure 1 represents the general architecture of a maritime surveillance system comprising the sensors in concert in a preferred embodiment according to the invention;
- Figure 2 represents one cluster of sensors in concert in a rapid deployment operation embodiment of the invention;
- Figure 3 represents an example of a spar-type buoy implementation of a multi-sensor platform according to an embodiment of the invention;
- Figure 4 represents the an other view of the buoy of figure 3 displaying the different payload components of the MSP;
- Figure 5 represents a side-view illustration of system configuration showing partial overlap of elements of a cluster of sensors in concert in an embodiment of the invention;
- Figures 6A and 6B represent a top-view illustration of system configuration showing partial overlap of a cluster of sensors in concert with respectively triangular and rectangular spatial deployment in two embodiments of the invention;
- Figure 7 represents a schematic view of overlap processing for 2D primary sensors in concert in an embodiment of the invention;
- Figure 8 represents a schematic view of overlap processing for 1 D sensors in concert in an embodiment of the invention;
- Figure 9 represents a schematic view of multi-sensor fusion in an embodiment of the invention.

In the specification, claims and drawings, the abbreviations and acronyms have the meaning indicated in the table below, except if otherwise mentioned in the text.

| **Abbreviation** | **Meaning** |
|---|---|
| AIS | Automatic Identification System |
| AoR | Area of Responsibility |
| BU | Buoy |
| CFAR | Constant False Alarm Rate |
| COTS | Commercial Off The Shelf |
| CW | Coastal Waters |
| D | Inter-MSP Distance |
| DE | Detection and Extraction |
| DIFAR | Directional Frequency And Ranging |
| EA | Exclusive Area |
| GNSS | Global Navigation Satellite System |
| GPS | Global Positioning System |
| HDSR | High Definition Surveillance Radar |
| HIDAR | High Instantaneous Dynamic Ranging |
| IMO | International Maritime Organisation |
| MMSI | Maritime Mobile Service Identity |
| MSF | Multi-Sensor Fusion |
| MSP | Multi-Sensor Platform |
| MSS | Maritime Safety and Security |
| NOC | National Operations Center |
| OA | Overlap Area |
| P_{D} | Probability of detection |
| P_{FA} | Probability of false alarm |
| PCC | Processing and Control Centre |
| PSF | Peer Sensor Fusion |
| R_{MSP} | Reach of a multi-sensor platform |
| RCR | Resolution Cell Response |
| RD | Radar sensor |
| RDF | Radio Direction Finder |
| R-ESM | Radar Electronic Support Measurement |
| ROC | Regional Operation Center |
| RF | Radio frequency |
| Tx/Rx | Transmitter/Receiver |
| TTW | Territorial Waters |
| VTMIS | Vessel Traffic Management Information System |
| VTS | Vessel Traffic Services |

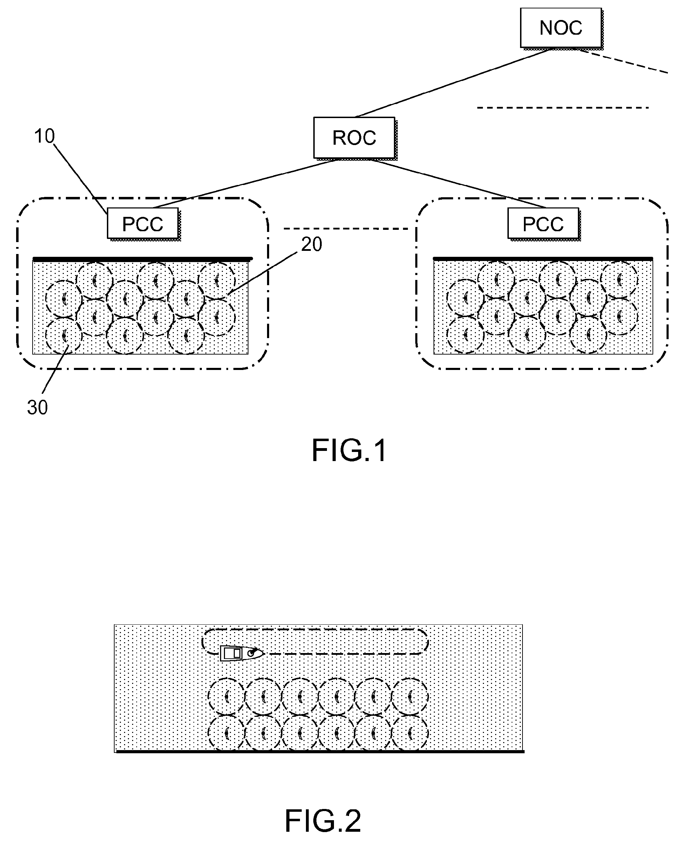

Figure 1 represents the general architecture of a maritime surveillance system comprising the sensors in concert in a preferred embodiment according to the invention.

From an organisational point of view, a maritime surveillance system may have a multi-tier structure in the sense that some operations may be managed by a local operations centre, some by a Regional Operations Centre (ROC) and some others by a National Operations Centre (NOC). Also, information and responsibility may be shared between various levels of vertical organisations such as the Coast Guards, the Navy, maritime safety intervention means, coastal civilian authorities, various police intelligence agencies, government bodies, intergovernmental bodies... The present invention is not so much concerned by the higher levels of the organisation (ROC and NOC) which mostly deal with fusion between sensor and intelligence data and where decisions are made on actions to be taken, based on these inputs. The invention resides mostly at the lower local level, made of multi-sensor platforms (MSP) 30 arranged in a cluster 20, and a Processing and Control Centre (PCC) 10. The PCC will control an Area of Responsibility (AoR). It comprises computing capacity to process sensor data and control MSPs in the cluster. In this context, a PCC is meant to run a number of supervisory sub-processes.

One key feature of the invention is that the platforms are positioned at sea and comprise each a number of sensors, whereas a traditional MSS system will rely on long range radars, positioned on elevations of the coast (typically 600 m elevation above sea for 100 km horizon). These radars may be supplemented by other sensors positioned at sea and fused at a higher level, but not cooperating directly at a raw data level with the radars. Clusters of the invention advantageously comprise a number of buoys. The geometry of the cluster is also an important feature of the invention that we will describe in detail further in the description.

Figure 2 represents one cluster of sensors in concert in a rapid deployment operation embodiment of the invention. A rapid deployment operation may need clusters of sensors moved rapidly to the new operations theatre. As already explained, this is more easily achieved with the system of the invention. In this embodiment, the PCC 10 is positioned on a vessel. Of course, other operational scenarios are possible such as one with a few MSPs to protect a closed harbour. The configuration of the cluster of MSPs can be adapted to the class and geometrical disposition of the maritime asset to be protected.

In all embodiments, the PCC can be fixed or mobile, and can be land-based or on board of a ship. It is possible that an MSP within a cluster serves as a PCC specifically if the number of MSPs is limited. The PCC can be redundant to improve system availability. It can be manned or unmanned. The following, not exhaustive, list contains functions performed by the PCC on delivered object measurements:
- reception of sensor measurements from all MSPs;
- multi-sensor fusion (MSF) of object measurements;
- matching of classification information with data base signatures to classify the objects;
- creation of tactical tracks of all detected objects in the AoR for transmission to an operation centre;
- production of a surveillance picture of the AoR (for manned PCCs only).

The PCC also performs control functions. It controls the operation of a specific subset of primary sensors in response to higher-level commands (e.g., from an operation centre). The following, not exhaustive, list contains aspects of primary sensors that can be controlled: waveform, processing, threshold setting (P_{D}/P_{FA}). It also controls the operation of a specific subset of MSPs in response to alerts or higher-level commands. The following, not exhaustive, list contains aspects of MSPs that can be controlled: altitude or dive (when the MSP is implemented on a buoy); communication; sensor update rate.

The PCC also performs management functions. It collects management information from all MSPs and each of their sensors. It produces the actual operational state of each sensor and each MSP.

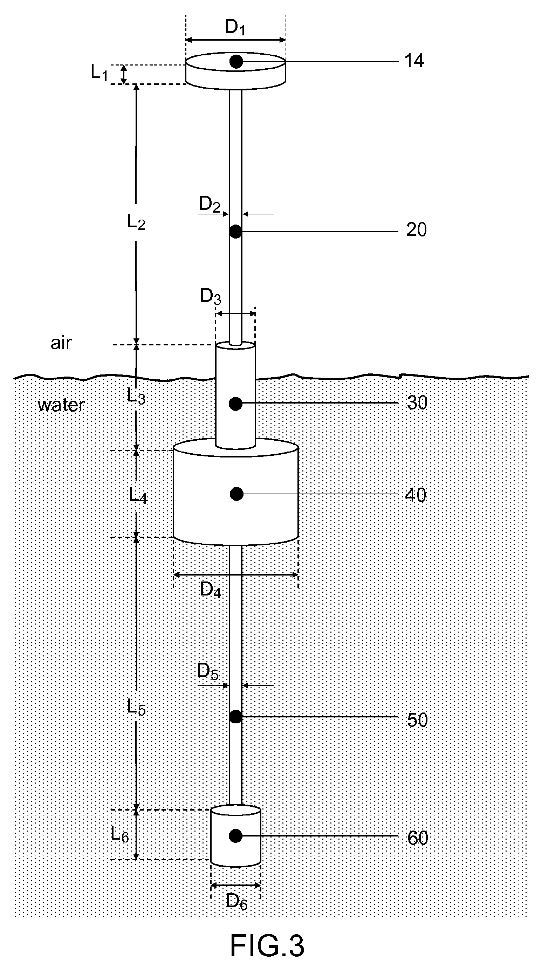

Figure 3 represents an example of a design of a MSP according to an embodiment of the invention. In this figure, the following references have the meaning :
- 14 : Top cylinder
- 20 : above-water mast
- 30 : corrective floater
- 40 : main floater
- 50 : underwater mast
- 60 : Bottom

In the illustrated embodiment, the physical structure of a MSP is based on a buoy. Other MSPs can be ships for the marine environment, but this is, obviously, a much more expensive solution. When other environments are not excluded, we could envision electrical power poles as MSPs for a land-based system, or balloons for air surveillance. However, the applicability of the invention to other environments than the marine environment is less appealing. In any case, the design of the structure will take due account of the altitude and depth where the sensors should be positioned to obtain a definite operational capability.

Advantageously, in the case of a buoy, it will be of the spar type because of its self-stabilising property. By appropriate design of the buoy, the skew of the buoy will not exceed a pre-defined maximum value, given a certain environmental situation. The shape of the buoy and the definition of the key dimensional parameters, D₁ through D₆ for the diameters of the 6 cylindrical parts (from top to bottom) and L₁ through L₆ for the height of the same, will be easily understood from figure 3. Typical values of the parameters are given in the following table. These dimensions, however, cannot be exact but depend on the design to obtain allowed maximum skew.

| Segment (i) | Typical length, Li [m] | Typical diameter, Di [m] |
|---|---|---|
| Top(i=1) | 0.5 | 1 |
| above-water mast (i = 2) | 15 | 0.25 |
| corrective floater (i = 3) | 2 | 0.5 |
| main floater (i = 4) | 2 | 1.5 |
| underwater mast (i = 5)) | 12 | 0.25 |
| Bottom (i = 6) | 1 | 1 |

In a preferred embodiment, the buoy is an assembly of cylindrical sections with the following functions:
1. The 'top' cylinder 10 houses the radar antenna, the AIS transponder and the radio antennas for communication.
2. The 'top' is elevated to the appropriate position above sea level by an 'above-water mast' part 20;
3. The 'corrective floater' 30 will attenuate the vertical oscillations of the buoy.
4. The 'main floater' 40 provides the bulk of the required buoyancy, and *houses the main processing and control sub-systems of the buoy. In case of a combustion based power generator, it also houses the fuel tank.
5. The main function of the 'under-water mast' 50 is to be a lever for the self-stabilising mechanism and to position the underwater sensors and centre of gravity of the buoy at the appropriate depth.
6. The 'bottom' cylindrical segment 60 houses the sonar and the power storage elements, i.e., batteries. The latter is done for reasons to lower the centre of gravity in order to maximise the length of the self-stabilising torque.

The 'main floater' plus half of the 'corrective floater' provide the exact required buoyancy, which equals the total gravity of the buoy. When the buoy descends, the 'corrective floater' provides more buoyancy so that there is a force in the opposite direction. When the buoy ascends, there is less buoyancy by the 'corrective floater', resulting in a net downwards force. In both cases, the vertical movements are attenuated.

The 'main floater' is positioned below the 'corrective floater' to suffer less from the movement of the water particles, which decreases downwards from the surface. This lower positioning further reduces the maximum skew of the buoy. Various buoy designs have been modelled and simulated and this has confirmed the stability of the buoy within the required skew limits.

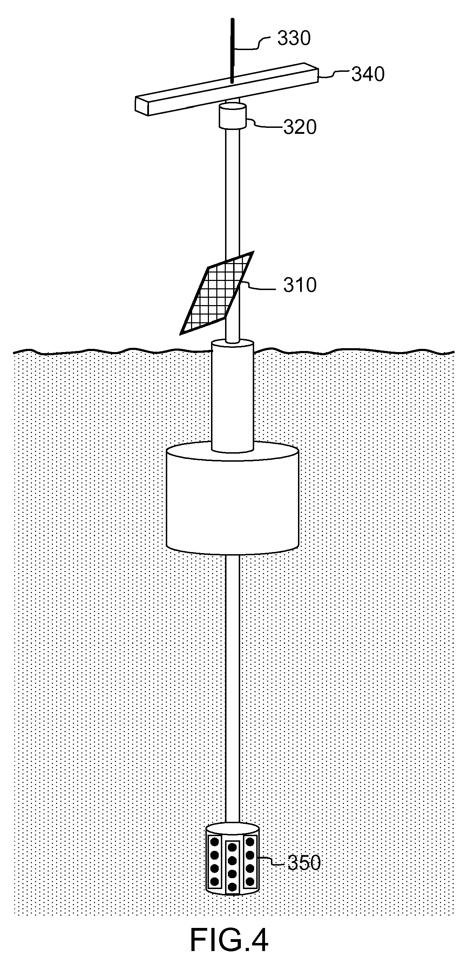

Figure 4 represents an other view of the buoy of figure 3 displaying the different payload components of the MSP.

An MSP can operate independently and autonomously thanks to three subsystems, one for electric, one for temporal and spatial awareness and one for communication. The computing capacity is needed for various purposes, e.g., system control and management including those of the sensors, and signal processing of the various sensors. Depending on the operational specification, a simple PC-board may suffice.

The electrical power subsystem consists of three components:
- a power generator 310, which is fully self-sufficient when based on renewable resources such as solar, wind, wave, and hydrogen, or partial self-sufficient when external fuel supply is required (e.g. micro-turbine);
- a power storage element, which may consist of a battery either or not in conjunction with an ultra-capacitor;
- a power control unit matching the available power supply to the requested power.

The temporal and spatial awareness subsystem may include a GPS-receiver with associated antenna 320 for time and position information and a dimensional electronic compass (gyro) to measure the 3D-orientation of the platform. Any other means to obtain temporal and spatial awareness can be used when applicable. This allows representing sensor data in absolute coordinates and stamped with the time validity.

The communication subsystem consists of one or more radio transmitter and receiver with associated antenna 330 to communicate with its direct neighbouring system entities (MSP, PCC) and a device that switches traffic bound to that MSP as well as traffic in transit from/to other system entities (MSP, PCC). The communication network will preferably be of the mesh (wireless multi-hop) type. In a network of this type, data packets hop from a node to an other from departure to destination. Various implementations are possible to optimise route selection. The routes may vary as a function of traffic and nodes availability.

Each MSP in a cluster may include a number of different kinds of primary sensors, typically radars, sonars, Radio Direction Finders (RDF), Sound Direction Finders (SDF) and Automatic Identification System (AIS) transponders. It may also include auxiliary sensors such as meteorological and pollution sensors (air and water) to measure the environment of the AoR. The primary sensors collectively provide kinematic information of objects through either:
- simultaneous range-bearing measurement of an object by at least one MSP. A sensor is qualified as a 2D-sensor when it simultaneously resolves two physical quantities;
- range-only measurement of an object by at least two MSPs (1D-sensor);
- bearing-only measurement of an object by at least two MSPs (1D-sensor),
   as well as classification information of objects such as:
- audio spectrum (either under water or above water) emitted by objects;
- range profiles of objects at various aspect angles;
- images of objects at various aspect angles.

When this information is specific, and possibly unique, for the object it is called the object signature.

Each primary sensor has an associated reach. The reach of a sensor defines for each applicable physical quantity associated with objects, the range up to which the sensor performs better than a predefined value under defined detection and environmental conditions. The reach of a sensor is usually specified as a set of tables containing detection ranges for various objects. Each table is valid for a specific detection criterion and specific environmental conditions. Examples of such tables are given in Table 1 and Table 2.

Table 1 and Table 2 are example performance tables for the various environmental conditions, and various (not further specified) surface target types. These tables contain the detection ranges. The unfeasible combinations of target type and target speed are shown grey in the tables.

**Table 1 - Reach of radar, in km from sensor, for sea-state 0 and no rain.**

| sea-state: 0 | | target speed [m/s] | | | |
|---|---|---|---|---|---|
| rain: 0 | | 1 | 5 | 10 | 15 |
| surface target type | SST1 | 5 | | | |
| | SST2 | 15 | 15 | 13 | |
| | SST3 | 20 | 20 | 18 | 15 |
| | SST4 | 30 | 28 | 25 | |

**Table 2 - Reach of radar, in km from sensor, for sea-state 3 and 4mm rain.**

| sea-state: 3 | | target speed [m/s] | | | |
|---|---|---|---|---|---|
| rain: 4 | | 1 | 5 | 10 | 15 |
| surface target type | SST1 | 3 | | | |
| | SST2 | 13 | 12 | 10 | |
| | SST3 | 18 | 17 | 16 | 15 |
| | SST4 | 30 | 27 | 24 | |

The reach of the MSP, R, is defined by the cross-section of the reaches of its comprising primary sensors. The geometry of the MSP is chosen such that the reach of all comprising sensors is comparable, i.e., the reach of the MSP equals the reach of any of its sensors. This means that a balance is achieved between sensors with geometry-limited reach and sensors with performance-limited reach. For example, if we consider an MSP with a radar and an AIS sensor, the altitude of both sensors being such that their horizon is at 20km: if the reach of the radar is 40km, it is geometry-limited because the horizon is at 20km; if the reach of the AIS transponder is 20km, it is performance limited. The reach of the MSP is 20km.

A preferred embodiment will include low-cost radar scanners 340 with short detection range (ie less than 30 NM), reduced bearing resolution (ie worse than 6°) and no Doppler processing. This will allow for a global much lower system cost. These radars are normally used for leisure boating. Their performance on an individual basis would hardly have any merit to be considered for security and safety applications but co-operation within a cluster of MSPs and with other sensors on the same MSP increases performance more than cost. Radars vendors having such catalogue products usable as radar elements in the system are Garmin, Furuno, Raymarine... Radar signal processing is preferably accomplished using a COTS solution such as the Sigma-S6 board from Rutter. The main feature needed is detection of objects within sea-clutter, and therefore advanced sea-clutter processing is needed.

Like radar, sonar is preferably a COTS product. Well-known COTS sonars are those used in sonobuoy applications. Passive examples are the DIFAR (Directional Frequency And Ranging) or the HIDAR (High Instantaneous Dynamic Ranging). For instance a DIFAR sonar 350 has a cylindrical array of hydrophones and samples acoustic signals based on bearing and frequency (from 5 Hz to 2.400 Hz typically). Active sonobuoy products could also be considered.

A Radio Direction Finder (RDF) can find the direction of the emitter of a radio signal and therefore be the preferred sensor for providing bearing information.

Automatic Identification Systems (AIS) have been made compulsory by the International Maritime Organisation (IMO) to monitor commercial vessels. The IMO has developed a set of standards with compulsory identification rules and equipment geared at controlling this identification. The vessels are equipped with an RF transponder, which will regularly broadcast in an allocated bandwidth signals carrying formatted data. Typical range of an AIS transponder is 30-40 km.

AIS data include among others the Maritime Mobile Service Identity (MMSI) - a 9 digits unique identifier of on-board RF equipments, Global Navigation Satellite System (GNSS) data and additional on-board sensors data, as well as voyage data. Consistency of AIS data can be checked both from an intrinsic standpoint as well as with external data, such as other sensors' data and intelligence sources.

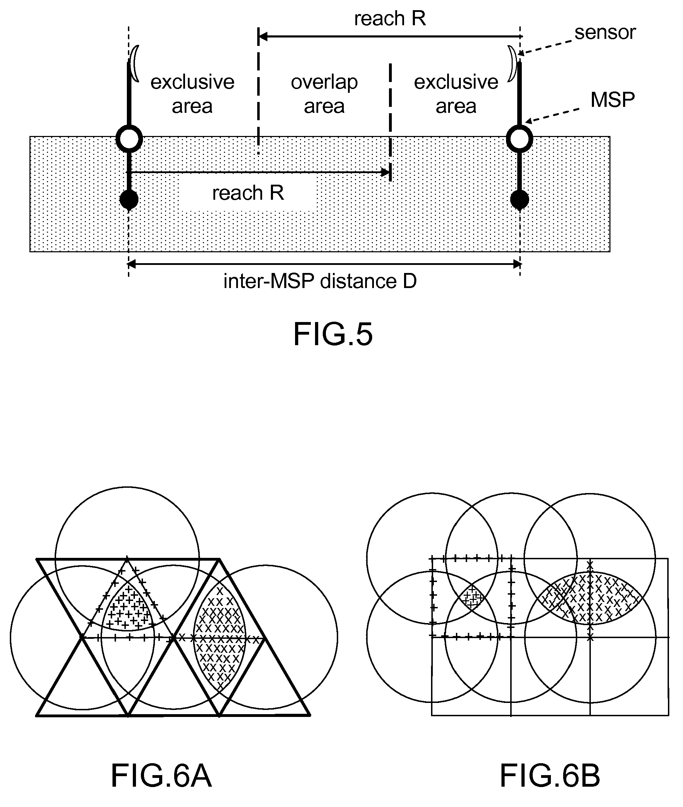

Figure 5 represents a side-view illustration of system configuration showing partial overlap of elements of a cluster of sensors in concert in an embodiment of the invention. The pattern of the distribution of MSPs over the AoR is called the spatial deployment of the MSPs. The inter-MSP distance (D) is a characterising feature of the pattern. Given a spatial deployment of MSPs, the system can be in one of the following overlap configurations, depending on the cross-section of the reaches (R) of two or more neighbouring MSPs:
- no overlap (D>2R); in this configuration, the system does not completely cover the surveillance area;
- partial overlap (R<D<2R); in this configuration there is an overlap area (OA) enclosed by a group of MSPs, each of which can detect objects in this OA. There is a one-on-one relation between each OA and the corresponding MSP-group. In addition, there is an exclusive area (EA) associated with each MSP, in which objects are detected by this MSP only.
- full overlap (R=D); this is a special case where the reach equals the distance between MSPs; this situation is mandatory when 1 D primary sensors are used.

The spatial deployment determines the shape and the size of the OA. In figures.6A and 6B partial overlap configurations are shown with respectively a triangular distribution pattern and a rectangular distribution pattern.

Any spatial deployment leads to non-isomorphic OAs, each of which corresponds to MSP-groups consisting of 2 or more MSPs. The cross-points of the plain bold lines indicate MSP locations. Lines of upright crosses show the largest MSP-group and its corresponding OA (fill of upright crosses). The shapes of the OAs on figures 6A and 6B are very different. Lines of diagonal crosses show the smallest MSP-group and its corresponding OA (fill of diagonal crosses). Advantageously, the spatial deployment may vary over the AoR in order to meet the performance/cost requirements of the system. Spatial deployment may also vary over time, in relation with the evolution of the mission. Of course, the number of MSPs required increases with the degree of overlap between the MSPs, given D and R fixed. A non-overlapping configuration can be useful at the periphery of the AoR, where complete coverage might not be required. This saves on the number of MSPs required.

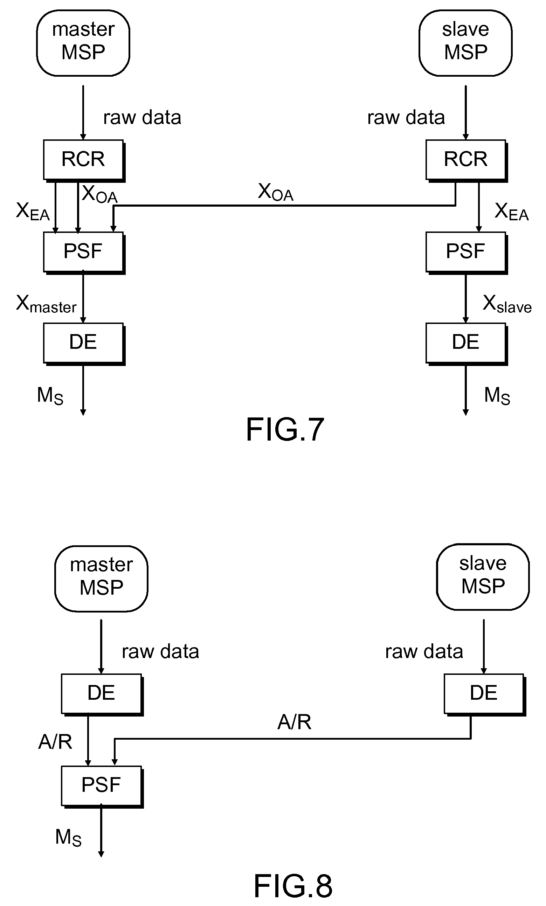

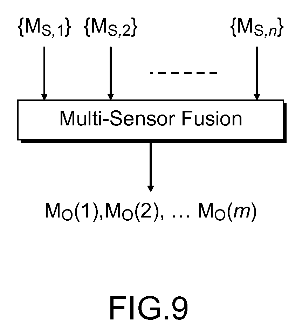

The functional architecture of the invention comprises means for processing sensor data in two ways. A first class of processing applies to sensors of the same type located on different MSPs. Its basic feature is the overlap processing, which is a class of sensor data fusion that we call "peer sensor fusion" or PSF. This processing will differ for 2D primary sensors and 1D primary sensors and is represented on two different schematics (figures 6 and 7 respectively). Passive sonar and RDF are both examples of 1 D sensors. If these sensors on neighbouring MSPs have partial overlap, then 1 D overlap processing must be applied. A second class of processing applies to sensors of different types, for instance of a radar and a sonar. This is described further down with comments of figure 9. It is also possible not to apply any overlap processing, either because there is no overlap or because PSF does not bring any benefit in a definite operational scenario. In this case, PSF only consists in adequately bringing data of the peer sensors to the next step of the process.

Figure 7 represents a schematic view of overlap processing for 2D primary sensors in concert in an embodiment of the invention.

One member of the MSP-group is designated master; the others are slave. Each MSP can participate in multiple MSP-groups. The allocation of master and slave to the various MSP-groups is done either by means of pre-defined schedules, or by means of a dynamic election algorithm. When in overlapping configuration, the system using 2D primary sensors experiences performance gains for the OA when overlap processing is applied. Overlap processing applies to each OA and is distributed over the corresponding MSP-group.

Overlap processing comprises the following activities for each of the 2D primary sensors eligible for overlap processing:
- Resolution Cell Response (RCR); each MSP of the group generates the response of each resolution cell as an intermediate output; the resolution cell response consists of the absolute coordinates (x,y) of the cell and the in-phase and quadrature components (aᵢ,a_{q}) of the complex amplitude of the sensor output for that cell, i.e., X ={x,y,aᵢ,a_{q}}; the complex amplitude can be un-thresholded or can be reduced thresholded in order to remove most of the noise and clutter;
- Distribution; each slave in the MSP-group sends its X_{OA}, i.e., the RCR for the OA, to the master of that group using its communication facilities;
- Peer Sensor Fusion (PSF); the master integrates all X_{OA} -contributions of the group and joins the result with the RCR of its exclusive area for further sensor data processing, i.e., Xₘₐₛₜₑᵣ = sum{X_{OA}} + X_{EA}; the slaves only offer the RCR of their exclusive area for further sensor data processing, i.e. Xₛₗₐᵥₑ = X_{EA}

Following overlap processing, each MSP performs standard Detection and Extraction (DE) processing, which results in sensor measurements Mₛ of objects. DE comprises standard processing such as thresholding to produce hits and clustering of hits into plots, which are called sensor measurements (Mₛ) in this document. Due to overlap processing, the sensor measurements produced by each MSP are spatially disjoint.

Figure 8 represents a schematic view of overlap processing for 1 D sensors in concert in an embodiment of the invention.

As previously explained in the case of 2D primary sensors, one of the 1 D primary sensors is designated master, the other being slaves. Overlap processing applies to each OA and is distributed over the corresponding MSP-group.

Overlap processing comprises the following activities for each of the 1 D primary sensors eligible for overlap processing:
- Detection and Extraction (DE); each MSP of the group performs standard detection and extraction operations, which result in range- or bearing-ambiguous sensor measurements of objects; the ambiguous measurements consist of the in-phase and quadrature components (aᵢ,a_{q}) of the complex amplitude of the bearing angle (ϕ) relative to northerly or range (r) relative to the position of the MSP, respectively Alpha = {ϕ,aᵢ,a_{q}}; Rho = {r, aᵢ,a_{q}};
- Distribution; each slave i in the MSP-group sends its entire measured Aⱼ or Rⱼ and the MSP position (Xⱼ,Yᵢ) at the time of measurement to the master using its communication facilities;
- Peer Sensor Fusion (PSF); the master triangulates the contributions of all MSPs of the group to obtain unambiguous range-bearing sensor measurements: M_{S} = Δ[Σᵢ(Aᵢ,xᵢ,yᵢ)] or M_{S} = Δ[Σᵢ(Rᵢ,xᵢ,yᵢ)]; the slaves do not contribute to PSF.

Figure 9 represents a schematic view of multi-sensor fusion in an embodiment of the invention.

Multi-sensor fusion finds the measurements M_{S,j} of different sensors pertaining to the same object j, and returns an object measurement M_{O}(j). For m primary sensors on an MSP, and N objects within the MSP reach, the multi-sensor fusion performs the following operation F on sensor measurements:
∀j = 1...N, M_{O}(J) = F [M_{S,1}(j), M_{S,2}(j),..., M_{S,m}(j)]

The operation F consists of state-of-the-art, but well-known tracking concepts like Kalman filtering and multiple hypotheses testing, where the individual sensor measurements are input, and tracks of objects are output. The reversion to individual measurements, i.e., the object measurements, is obtained by time sampling of each track.

Multi-sensor fusion ensures performance gains and singular reporting for each detected object Each MSP sends its object measurements and environment measurements to the PCC for further processing.

One of the further processes may be a third data fusion process used to improve classification and identification of the tracks.This process builds on the said multi-sensor fusion process, which has revealed that, for example, a radar measurement, providing the localization of an object, and a sonar measurement, providing an audio spectrum of an object, pertain to the same object. The third fusion process correlates this audio spectrum with the signatures in an object database. The matching signature is used to classify/identify the detected object. This operation is akin to Radar-Electronic Support Measures (R-ESM), but the usage of a sonar sensor for the classification of surface targets is advantageous in the context of this invention.

The invention is not limited to the specific embodiments, which have been described in this specification. The scope of the invention is only defined by the appended claims, which follow.

## Claims

1. Maritime surveillance system comprising: i) at least one Processing and Control Centre (PCC, 10); ii) at least one cluster (20) of Multi-Sensor Platforms (MSPs, 30), each MSP comprising at least two sensors of a first type and a second type (340, 350); iii) a first data fusion module which is adapted to process data from sensors of one of the first and second types (340, 350) in said cluster; iv) a second data fusion module which is adapted to process the output of the first data fusion module relating to the at least two sensors (340, 350) of one MSP, said maritime surveillance system being **characterised in that** the at least two sensors are adapted to provide distance and bearing, one of them being adapted to be designated as master sensor within its cluster, the other sensors being adapted to be designated as slaves to the master, the master and slave sensors being further adapted to provide output to be integrated in a Resolution Cell Response (RCR), the RCRs from the slave sensors being integrated with the RCR of an overlapping area of the master sensor, master and slave sensors each contributing sensor data from non-overlapping areas as input to the second data fusion module.

2. Maritime surveillance system according to claim 1 **characterised in that** at least one MSP is a spar-type buoy.

3. Maritime surveillance system according to claim 2 **characterised in that** the spar-type buoy comprises at least a corrective floater (30) and a main floater (40), the main floater and half of the corrective floater substantially providing the buoyancy to equal the gravity of the buoy.

4. Maritime surveillance system according to claim 1 **characterised in that** each MSP comprises at least an electrical power subsystem, a temporal and spatial awareness subsystem and a communication subsystem.

5. Maritime surveillance system according to claim 1 **characterised in that** one of the at least two primary sensors of at least one MSP is a radar (340) with no Doppler processing and a reach not significantly better than 50 km and/or a bearing resolution not significantly better than 6°.

6. Maritime surveillance system according to claim 1 **characterised in that** one of the at least two primary sensors of at least one MSP is a sonar (350) with a cylindrical array of hydrophones which samples acoustic signals based on bearing and frequency.

7. Maritime surveillance system according to claim 1 **characterised in that** some MSPs within a cluster are positioned at a distance D which is equal to the reach R of the MSP.

8. Maritime surveillance system according to claim 1 **characterised in that** some MSPs within a cluster are positioned at a distance D which is larger than the reach R of the MSP and lower than twice this reach R.

9. Maritime surveillance process comprising: i) at least one supervisory sub-process; ii) at least one cluster of groups of sensing sub-processes, each group comprising sensing sub-processes of at least a first and a second type; iii) a first data fusion sub-process which receives as input an output from the sensing sub-processes of one of the first and second types in said cluster; and iv) a second data fusion sub-process which receives as input the output of the first data fusion sub-process relating to the at least two sensing sub-processes of a first and second types of one group of sensing sub-processes, said maritime surveillance process being **characterised in that** the at least two primary sensing sub-processes provide distance and bearing; one of the at least two sensing sub-processes is designated as master sensing sub-process within its cluster, the other sensing sub-processes being slaves to the master; sensor data from master and slaves sub-processes are each integrated in a Resolution Cell Response (RCR) for each sub-process; and the RCRs from the slave sensing sub-processes are integrated with the RCR of the overlapping area of the master sensing sub-process, master and slaves each contributing the sensor data from their non-overlapping areas as input to the second data fusion sub-process.

10. Maritime surveillance process according to claim 9 **characterised in that** it further comprises a third data fusion sub-process, in which classification information, belonging to an object detected at the output of the second data fusion sub-process, is correlated with signatures in an object database, and **in that** a matching signature classifies and/or identifies the detected object.

11. Maritime surveillance process according to claim 10, **characterised in that** the classification information is provided by a sonar sensor, the kinematic information is provided by an above water 2D primary sensor, and the object is a surface object.

## Patentansprüche

1. Seeüberwachungssystem, umfassend:
i) mindestens ein Verarbeitungs- und Steuerungszentrum (PCC, 10);
ii) mindestens einen Schwarm (20) von Multisensorplattformen (MPSs, 30), wobei jede MSP mindestens zwei Sensoren eines ersten Typs und eines zweiten Typs (340, 350) umfasst;
iii) ein erstes Datenvereinigungsmodul, das dafür eingerichtet ist, Daten von Sensoren eines der ersten und zweiten Typen (340, 350) in dem Schwarm zu verarbeiten;
iv) ein zweites Datenvereinigungsmodul, das dafür eingerichtet ist, die Ausgabe des ersten Datenvereinigungsmoduls zu verarbeiten, die sich auf die mindestens zwei Sensoren (340, 350) einer MSP bezieht,
wobei das Seeüberwachungssystem **dadurch gekennzeichnet ist, dass** die mindestens zwei Sensoren dafür eingerichtet sind, Entfernung und Peilung bereitzustellen, wobei einer davon dafür eingerichtet ist, als Master-Sensor in seinem Schwarm festgelegt zu werden, wobei die anderen Sensoren dafür eingerichtet sind, als Slaves zu dem Master festgelegt zu werden, wobei die Master- und Slave-Sensoren ferner dafür eingerichtet sind, eine Ausgabe bereitzustellen, die in einer Auflösungszellenantwort (RCR) zu integrieren ist, wobei die RCRs von den Slave-Sensoren mit der RCR eines überlappenden Gebiets des Master-Sensors integriert werden, wobei Master- und Slave-Sensoren jeweils Sensordaten aus nicht überlappenden Gebieten als Eingabe in das zweite Datenvereinigungsmodul beisteuern.

2. Seeüberwachungssystem nach Anspruch 1, **dadurch gekennzeichnet, dass** mindestens eine MSP eine Boje vom Spierentyp ist.

3. Seeüberwachungssystem nach Anspruch 2, **dadurch gekennzeichnet, dass** die Boje vom Spierentyp mindestens einen Korrekturschwimmer (30) und einen Hauptschwimmer (40) umfasst, wobei der Hauptschwimmer und die Hälfte des Korrekturschwimmers im Wesentlichen den Auftrieb bereitstellen, um die Schwerkraft der Boje auszugleichen.

4. Seeüberwachungssystem nach Anspruch 1, **dadurch gekennzeichnet, dass** jede MSP mindestens ein Elektroenergieteilsystem, ein Zeit- und Raumkenntnisteilsystem und ein Kommunikationsteilsystem umfasst.

5. Seeüberwachungssystem nach Anspruch 1, **dadurch gekennzeichnet, dass** einer der mindestens zwei Primärsensoren mindestens einer MSP ein Radar (340) ohne Doppler-Verarbeitung und mit einer Reichweite, die nicht wesentlich besser als 50 km ist, und/oder einer Peilungsauflösung, die nicht wesentlich besser als 6° ist, ist.

6. Seeüberwachungssystem nach Anspruch 1, **dadurch gekennzeichnet, dass** einer der mindestens zwei Primärsensoren mindestens einer MSP ein Sonar (350) mit einer zylindrischen Anordnung von Hydrophonen ist, die akustische Signale auf der Grundlage von Peilung und Frequenz abtastet.

7. Seeüberwachungssystem nach Anspruch 1, **dadurch gekennzeichnet, dass** einige MSPs innerhalb eines Schwarms in einem Abstand D positioniert sind, der gleich der Reichweite R der MSP ist.

8. Seeüberwachungssystem nach Anspruch 1, **dadurch gekennzeichnet, dass** einige MSPs innerhalb eines Schwarms in einem Abstand D positioniert sind, der größer als die Reichweite R jeder MSP und niedriger als das Doppelte dieser Reichweite R ist.

9. Seeüberwachungsprozess, umfassend:
i) mindestens einen Aufsichtsteilprozess;
ii) mindestens einen Schwarm von Gruppen von Erfassungsteilprozessen, wobei jede Gruppe Erfassungsteilprozesse mindestens eines ersten und eines zweiten Typs umfasst;
iii) einen ersten Datenvereinigungsteilprozess, der eine Ausgabe von den Erfassungsteilprozessen eines der ersten und zweiten Typen in dem Schwarm als Eingabe empfängt; und
iv) einen zweiten Datenvereinigungsteilprozess, der die Ausgabe des ersten Datenvereinigungsteilprozesses, die sich auf die mindestens zwei Erfassungsteilprozesse eines ersten und zweiten Typs einer Gruppe von Erfassungsteilprozessen bezieht, als Eingabe empfängt,
wobei der Seeüberwachungsprozess **dadurch gekennzeichnet ist, dass** die mindestens zwei Erfassungsteilprozesse Entfernung und Peilung bereitstellen;
wobei einer der mindestens zwei Erfassungsteilprozesse als Master-Erfassungsteilprozess in seinem Schwarm festgelegt wird, wobei die anderen Erfassungsteilprozesse Slaves des Masters sind;
wobei Sensordaten von Master- und Slave-Erfassungsteilprozessen jeweils in einer Auflösungszellenantwort (RCR) für jeden Teilprozess integriert werden; und
wobei die RCRs von den Slave-Erfassungsteilprozessen mit der RCR des überlappenden Gebiets des Master-Erfassungsteilprozesses integriert werden, wobei Master und Slaves jeweils die Sensordaten aus ihren nicht überlappenden Gebieten als Eingabe in den zweiten Datenvereinigungsteilprozess beisteuern.

10. Seeüberwachungsprozess nach Anspruch 9, **dadurch gekennzeichnet, dass** er ferner einen dritten Datenvereinigungsteilprozess umfasst, in dem Klassifizierungsinformation, die zu einem in der Ausgabe des zweiten Datenvereinigungsteilprozesses ermittelten Objekt gehört, mit Signaturen in einer Objektdatenbank korreliert wird, und dadurch, dass eine übereinstimmende Signatur das ermittelte Objekt klassifiziert und/oder identifiziert.

11. Seeüberwachungsprozess nach Anspruch 10, **dadurch gekennzeichnet, dass** die Klassifizierungsinformation durch einen Sonarsensor bereitgestellt wird, wobei die kinematische Information durch einen zweidimensionalen Überwasser-Primärsensor bereitgestellt wird und das Objekt ein Oberflächenobjekt ist.

## Revendications

1. Système de surveillance maritime comprenant : i) au moins un centre de traitement et de commande (PCC, 10) ; ii) au moins une grappe (20) de plateformes de capteurs multiples (MSP, 30), chaque MSP comprenant au moins deux capteurs d'un premier type et d'un deuxième type (340, 350) ; iii) un premier module de fusion de données qui est configuré pour traiter les données des capteurs de l'un des premier et deuxième types (340, 350) dans ladite grappe ; iv) un deuxième module de fusion de données qui est configuré pour traiter la sortie du premier module de fusion de données concernant lesdits au moins deux capteurs (340, 350) d'une MSP, ledit système de surveillance maritime étant **caractérisé en ce que** lesdits au moins deux capteurs sont configurés pour fournir une distance et un gisement, l'un d'eux étant configuré pour être désigné en tant que capteur maître dans sa grappe, les autres capteurs étant configurés pour être désignés en tant qu'esclaves pour le maître, les capteurs maître et esclaves étant en outre conçus pour fournir une sortie à intégrer dans une réponse de cellule de résolution (RCR), les RCR des capteurs esclaves étant intégrées avec la RCR d'une zone de superposition du capteur maître, les capteurs maître et esclaves contribuant chacun aux données de capteur provenant de zones de non superposition en tant qu'entrée pour le deuxième module de fusion de données.

2. Système de surveillance maritime selon la revendication 1, **caractérisé en ce qu'**au moins une MSP est une bouée de type espar.

3. Système de surveillance maritime selon la revendication 2, **caractérisé en ce que** la bouée de type espar comprend au moins un flotteur de correction (30) et un flotteur principal (40), le flotteur principal et la moitié du flotteur de correction assurant sensiblement une flottabilité égale à la gravité de la bouée.

4. Système de surveillance maritime selon la revendication 1, **caractérisé en ce que** chaque MSP comprend au moins un sous-système de puissance électrique, un sous-système de perception temporelle et spatiale et un sous-système de communication.

5. Système de surveillance maritime selon la revendication 1, **caractérisé en ce que** l'un desdits au moins deux capteurs principaux d'au moins une MSP est un radar (340) sans traitement Doppler et avec une portée pas nettement supérieure à 50 km et/ou avec une résolution de gisement pas nettement meilleure que 6°.

6. Système de surveillance maritime selon la revendication 1, **caractérisé en ce que** l'un desdits au moins deux capteurs principaux d'au moins une MSP est un sonar (350) avec un réseau cylindrique d'hydrophones qui échantillonne les signaux acoustiques sur la base du gisement et de la fréquence.

7. Système de surveillance maritime selon la revendication 1, **caractérisé en ce que** certaines MSP dans une grappe sont positionnées à une distance D qui est égale à la portée R de la MSP.

8. Système de surveillance maritime selon la revendication 1, **caractérisé en ce que** certaines MSP dans une grappe sont positionnées à une distance D qui est supérieure à la portée R de la MSP et inférieure à deux fois cette portée R.

9. Processus de surveillance maritime comprenant : i) au moins un processus secondaire de surveillance ; ii) au moins une grappe de groupes de processus secondaires de détection, chaque groupe comprenant un processus secondaire de détection d'au moins des premier et deuxième types ; iii) un premier processus secondaire de fusion de données qui reçoit en entrée une sortie des processus secondaires de détection de l'un des premier et deuxième types dans ladite grappe ; et iv) un deuxième processus secondaire de fusion de données qui reçoit en entrée la sortie du premier processus secondaire de fusion de données concernant lesdits au moins deux processus secondaires de détection des premier et deuxième types d'un groupe de processus secondaires de détection, ledit processus de surveillance maritime étant **caractérisé en ce que** lesdits au moins deux principaux processus secondaires de détection fournissent une distance et un gisement ; l'un desdits au moins deux processus secondaires de détection est désigné en tant que processus secondaire de détection maître dans sa grappe, les autres processus secondaires de détection étant des esclaves pour le maître ; les données de capteur provenant des processus secondaires maître et esclaves sont intégrées chacune dans une réponse de cellule de résolution (RCR) pour chaque processus secondaire ; et les RCR provenant des processus secondaires de détection esclaves sont intégrées avec la RCR de la zone de superposition du processus secondaire de détection maître, le maître et les esclaves contribuant chacun aux données de capteur provenant de leurs zones de non superposition en tant qu'entrée pour le deuxième processus secondaire de fusion de données.

10. Processus de surveillance maritime selon la revendication 9, **caractérisé en ce qu'**il comprend en outre un troisième processus secondaire de fusion de données, dans lequel des informations de classification, appartenant à un objet détecté à la sortie du deuxième processus secondaire de fusion de données, sont corrélées avec des signatures dans une base de données d'objets, et **en ce qu'**une signature correspondante classifie et/ou identifie l'objet détecté.

11. Processus de surveillance maritime selon la revendication 10, **caractérisé en ce que** les informations de classification sont fournies par un capteur de sonar, les informations cinématiques sont fournies par un capteur principal bidimensionnel au-dessus de l'eau, et l'objet est un objet à la surface.
